## Europäisches Patentamt
## European Patent Office
## Office européen des brevets

(19)

(11) Publication number: **0 072 916**
A2

(12)

# EUROPEAN PATENT APPLICATION

(21) Application number: 82106385.6

(22) Date of filing: 15.07.82

(51) Int. Cl.³: **G 01 F 25/00**

(30) Priority: 27.07.81 US 287187
30.07.81 US 288338

(43) Date of publication of application:
02.03.83 Bulletin 83/9

(84) Designated Contracting States:
BE DE FR GB NL

(71) Applicant: FLOW TECHNOLOGY, INC.
4250 East Broadway Road
Phoenix Arizona 85036(US)

(71) Applicant: Francisco, Edward Ellsworth, Jr.
3400 Claremont
Paradise Valley Arizona 85253(US)

(72) Inventor: Chors, Gary Dean
642 East Malibu
Tempe Arizona 85282(US)

(72) Inventor: Francisco, Edward Ellsworth, Jr.
6121 Palo Cristi
Paradise Valley Arizona 85253(US)

(72) Inventor: Jackson, Ronald Joseph
3802 East Palm Lane
Phoenix Arizona 85008(US)

(74) Representative: Patentanwälte Grünecker, Dr.
Kinkeldey, Dr. Stockmair, Dr. Schumann, Jakob, Dr.
Bezold, Meister, Hilgers, Dr. Meyer-Plath
Maximilianstrasse 43
D-8000 München 22(DE)

(54) Apparatus for determining the characteristic of a flowmeter.

(57) A fluid displacement measuring cylinder has near its ends, respectively, an inlet and an outlet. A fluid displacement measuring piston is adapted to travel through the measuring cylinder as a fluid barrier. A control piston having first and second sides is adapted to travel through the control cylinder as a fluid barrier. A rod connects the control piston only to the side of the measuring piston facing towards one end of the measuring cylinder. A gas pressurized plenum chamber is connected to the control cylinder so the force of the gas pressure urges the measuring piston toward the other end of the measuring cylinder. The movement of the measuring piston through the measuring cylinder is sensed and the movement of the control piston through the control cylinder is fluidically controlled. The pressure in the plenum chamber, which has a substantially larger volume than the control cylinder, is selected so as to cancel the force imbalance caused by the rod.

./...

FIG. 1

13960/LTR-sgd                    -1-

## APPARATUS FOR DETERMINING THE
## CHARACTERISTIC OF A FLOWMETER

### Background of the Invention

This invention relates to the measurement of fluid flow and, more particularly, to apparatus for determining the characteristic of a flowmeter.

U.S. Patent 4,152,922 which issued May 8, 1979, to Edward E. Francisco, Jr., discloses a ballistics flow prover in which a measuring piston adapted to travel through a measuring cylinder is connected by a rod to a control piston adapted to travel through a control cylinder. The measuring cylinder is connected in a fluid line in series with a flowmeter whose characteristic is to be determined. A source of pressurized air is connected to the control cylinder so the force of the air pressure acts alternatively on both sides of the control piston. The air pressure is regulated to control movement of the control piston through the control cylinder during operation of the prover.

The connection of the rod to only one side of the measuring piston reduces the area to which fluid can be

13960/LTR                    -2-

exposed on one side of the measuring piston, vis-a-vis, the other side. This creates on the measuring piston an undesirable pressure differential that retards its movement during a test run. To eliminate such a pressure differential, one embodiment of the prover disclosed in Patent 4,152,922 employs a rod that is connected to both sides of the measuring piston and extends all the way through the measuring piston from end to end. As a result of the additional length of rod extending out of the end of the measuring cylinder opposite the control cylinder, the apparatus occupies substantially more space.

Summary of the Invention

According to the invention, a gas pressurized plenum chamber is used to compensate for the above-described pressure differential in apparatus for determining the characteristic of a flowmeter. Specifically, a fluid displacement measuring cylinder has near its ends, respectively, an inlet and an outlet. A fluid displacement measuring piston is adapted to travel through the measuring cylinder as a fluid barrier. A control piston having first and second sides is adapted to travel through the control cylinder as a fluid barrier. A rod connects the control piston only to the side of the measuring piston facing toward one end of the measuring cylinder. A gas pressurized plenum chamber is connected to the control cylinder so the force of the gas pressure urges the measuring piston toward the other end of the measuring cylinder. The movement of the measuring piston through the measuring cylinder is sensed and the movement of the control piston through the

13960/LTR                    -3-

control cylinder is fluidically controlled. The pressure in the plenum chamber, which has a substantially larger volume than the control cylinder, is selected so as to cancel the force imbalance caused by the rod. Thus, the apparatus can be substantially shortened in length because it is not necessary for the rod to extend through the measuring cylinder from end to end and protrude from the end of the measuring cylinder opposite the control cylinder.

According to the invention, a pressurized liquid supply is connected to the control cylinder so the force of the liquid pressure acts on the side of the control piston opposite the side thereof against which the gas pressure from the above described plenum chamber acts. The pressure of the liquid in the control cylinder is automatically adjusted to control the movement of the measuring piston. By virtue of the incompressability of liquid, the measuring piston responds rapidly to change commands, while at the same time being subjected to compensation for the force imbalance caused by the rod and frictional forces. Preferably, the pressure of the liquid in the control cylinder is controlled to maintain a constant pressure difference in the measuring cylinder across the measuring piston. Consequently, the movement of the measuring piston through the measuring cylinder during a test run has essentially little or no effect on the flow rate and/or density of the line fluid, even when the line fluid is a gas.

13960/LTR                              -4-

## Brief Description of the Drawings

The features of a specific embodiment of the best mode contemplated of carrying out the invention are illustrated in the drawings, in which:

FIG. 1 is a schematic diagram of a prover incorporating the principles of the invention; and

FIG. 2 is a more detailed schematic block diagram of the control console of FIG. 1 and several other selected components of the prover.

13960/LTR                    -5-

Detailed Description of the Specific Embodiment

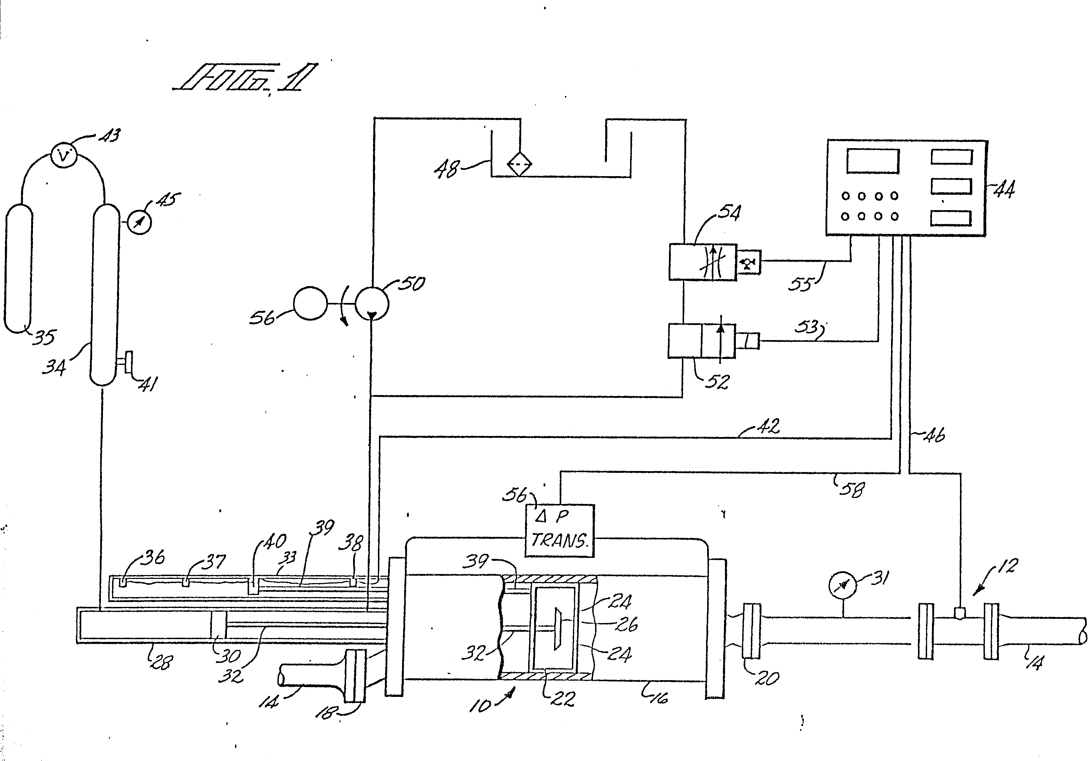

In FIG. 1, a prover 10 is connected in series with a flowmeter 12 under test in a fluid line 14. Prover 10 includes a measuring cylinder 16 with an inlet 18 and an outlet 20 connected to line 14. A measuring piston 22 is adapted to travel through cylinder 16 as a fluid barrier. A plurality of openings 24 are formed in piston 22 to permit flow of fluid from line 14 through cylinder 16 when piston 22 is at rest. A poppet valve 26 is adapted to move toward and away from openings 24 to close and open the passage therethrough. A control cylinder 28 abuts the inlet end of cylinder 16 in axial alignment therewith. A control piston 30 is adapted to travel through cylinder 28. Poppet valve 26, and thus measuring piston 22, is coupled to control piston 30 by a rod 32. Rod 32 is only connected to the upstream side of piston 22 and the side of control piston 30 facing toward it. Reference is made to Patent 4,152,922, the disclosure of which is incorporated fully herein by reference, for a description of the specific construction of the described elements of prover 10, including the seals and bushings thereof, as well as the elements described hereinafter.

Poppet valve 26 can be considered to be part of piston 22 insofar as the pressure forces exerted thereon by the fluid line 14 are concerned. As a result of the connection of rod 32 only to the upstream side of poppet valve 26, the area of the upstream side of piston 22 against which the fluid in line 14 acts is smaller than the area of the downstream side of piston 22 against which the fluid in line 14 acts. This creates a force imbalance urging piston 22 toward the upstream end of cylinder 16, thereby impeding travel of piston 22 from the upstream end of cylinder 16 to the downstream end thereof. To compensate for and cancel the force imbalance, a plenum chamber 34 is connected to the end of control cylinder 28, opposite measuring cylinder 16. Plenum chamber 34 is charged with pressurized gas from a gas source 35, the pressure of the gas in plenum chamber 34 preferably being selected at an optimum value to exert on the side of piston 30 facing away from piston 22 a force equal and opposite to the force imbalance on piston 22 due to rod 32 plus the dynamic friction of piston 30 moving through cylinder 16, caused by seals, bushings, etc. The optimum value of plenum gas pressure is determined by comparing the flowmeter response when piston 30 is in its standby, i.e., upstream, position with the flowmeter response when piston 30 is moving through cylinder 16. The plenum gas pressure is adjusted until the two responses are the same, which indicates that piston 30 is not impeding flow through the line while piston 30 is moving through cylinder 16. The optimum value of the pressure in plenum chamber 34 varies as a function of the static fluid pressure in line 14. For precise measurements, the above procedure should be carried out before each run or the static pressure could be measured before a test run, for example by a pressure probe 31 in line 14 and the pressure in plenum chamber 34 then adjusted accordingly to the optimum value. To this end, source 35 is connected to plenum chamber 34 through a manual control valve 43 and plenum chamber 34 has a pressure gauge 45 and a venting value 41. The pressure of source 35 exceeds the largest value to which it is desired to pressurize plenum chamber 34. The volume of plenum chamber 34 is substantially larger than that of cylinder 28, e.g., 30 times or more larger, so that the pressure of the gas from plenum chamber 34 remains approximately constant as the volume in cylinder 28 changes.

13960/LTR                    -7-

To sense the movement of piston 22 through cylinder 16, an elongated housing 33 having a longitudinal axis parallel to the axis of cylinder 28 is attached to the upstream end of cylinder 16. Optical sensors 36, 37, and 38 are mounted on the inside of housing 33 along its length. A rod 39 is connected between piston 22 in cylinder 16 and a flag 40 in housing 33.

Optical sensors 36, 37, and 38 each comprise a photocell and a light source aligned with the photocell to direct a light beam at the photocell. As piston 22 travels through cylinder 16, flag 40 travels through housing 33, sequentially interrupting the light beam of optical sensors 36, 37, and 38 to generate sequential electrical pulse signals. Optical sensor 36 is located at a position in housing 33 corresponding to the upstream rest position of piston 22 in cylinder 16. Optical sensor 37 is located in housing 33 at a position corresponding to the position of piston 22 in cylinder 16 at the beginning of a measuring interval, i.e., preferably far enough from the upstream position of piston 22 for piston 22 to be moving in synchronism with fluid flow through line 14. Optical sensor 38 is located in housing 33 at a position corresponding to the position of piston 22 at the end of the measuring interval near the downstream end of cylinder 16.

Sensors 36, 37, and 38 are coupled by a cable 42 to a control console 44. The output of meter 12 which could be, for example, an electrical pulse signal proportional in frequency to the flow rate, is coupled by a cable 46 to console 44. Console 44 includes electronic circuitry for determining the characteristic of flow meter 12. This could comprise a circuitry shown in FIG. 8 of U.S. Patent 3,403,544 the disclosure of which is incorporated herein fully by reference. Responsive to the electrical signals generated by sensors 36 thorough 38 and flowmeter 12, the circuitry in console 44 produces a value of flowmeter characteristic which is displayed by console 44.

13960/LTR                    -8-

The movement of control piston 30 and thus measuring piston 22 is controlled by a closed loop hydraulic, i.e., liquid, control system. An incompressible hydraulic fluid, preferably a suitable hydraulic oil, is stored in a reservoir 48. Hydraulic fluid from reservoir 48 is supplied to the inlet of a pump 50. Fluid from the outlet of pump 50 is supplied to the portion of cylinder 28 between piston 30 and the upstream end of cylinder 16, and to the inlet of a two-way hydraulic dump valve 52. Valve 52 is operated from console 44, via a cable 53. The outlet of dump valve 52 is connected through a servo control valve 54 to reservoir 48. Valve 54 is operated from console 44 via a cable 55. Pump 50 is driven by a constant speed motor 56. Pump 50 is a constant pressure, variable displacement pump that produces a slightly larger pressure than the gas in plenum chamber 34. This pressure is sufficiently large to overcome not only the gas pressure exerted on piston 30, but also the frictional forces and the force of the line fluid so as to permit piston 22 to be driven upstream. A differential pressure ($\Delta$P) transmitter 56 has a pair of inlet ports fluidically connected to the upstream end and the downstream end of cylinder 16, respectively, and an electrical output that is connected by a cable 58 to console 44. $\Delta$P transmitter 56 produces an electrical output signal proportional to the pressure difference between the region of cylinder 16 upstream of piston 22 and the region of cylinder 16 downstream of piston 22, when openings 24 are closed by poppet valve 26 and piston 22 is traveling through cylinder 16.

13960/LTR                    -9-

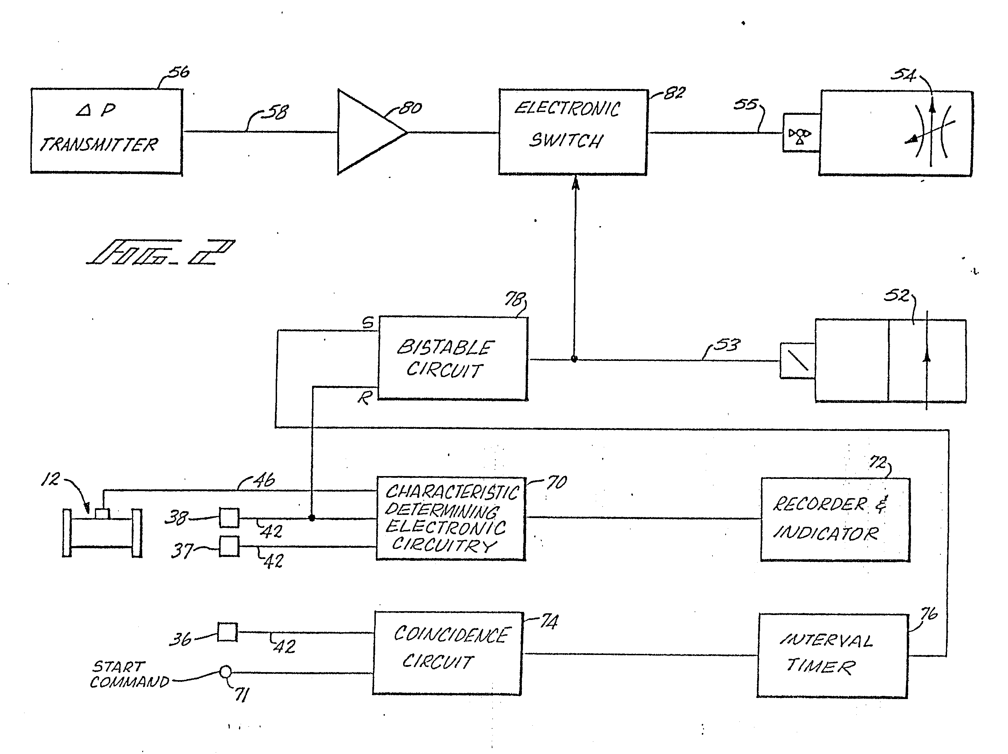

As shown in FIG. 2, control console 44 includes characteristic determining electronic circuitry 70, which could comprise the circuitry shown in FIG. 8 of U.S. patent 3,403,544. The disclosure of this patent is incorporated herein fully by reference. Cables 42 and 46 are connected to the inputs of circuitry 70 and the output of circuitry 70 is connected to a recorder and indicator 72. Responsive to the electrical pulse signals generated by sensors 37 and 38 when flag 40 interrupts their respective light beams and the electrical signal generated by flowmeter characteristic, circuitry 70 produces a value of flow meter characteristic, which is displayed by recorder and indicator 72. Cable 42 and a start command terminal are connected to the inputs of a coincidence circuit 74. The output of coincidence circuit 74 is connected to the input of an interval timer 76. The output of interval timer 76 is connected to a set input of a bistable circuit 78. Optical sensor 38 is connected to the reset input of bistable circuit 78. ΔP transmitter 56 is connected by cable 58 to the input of a servo amplifier 80. The output of servo amplifier 80 is coupled by an electronic switch 82 and cable 55 to the control input of servo control valve 54. The output of bistable circuit 78 is connected by cable 53 to the control input of dump valve 52 and to the switching input of electronic switch 82. When the light beam of sensor 36 is interrupted and the start command is present on terminal 71, coincidence circuit 74 triggers interval timer 76. At the end of a measured time interval, timer 76 sets bistable circuit 78. When bistable circuit 78 is set, dump valve 52 is opened and electronic switch 82 is closed thereby

13960/LTR                    -10-

completing the feedback path from ΔP transmitter 56 to servo control valve 54. When the light beam of sensor 38 is interrupted, bistable circuit 78 is reset, dump valve 52 closes, and electronic switch 82 opens, thereby opening the feedback path from ΔP transmitter 56 to servo control valve 54.

In operation, prior to a test run, dump valve 52 is closed, piston 22 lies at the upstream end of cylinder 16, the light beam of sensor 36 is interrupted, electronic switch 82 is open, and poppet valve 26 is held open by the pressure of the hydraulic fluid exerted on the side of piston 30 facing toward cylinder 16. To release piston 22 for a test run, a start command is applied to terminal 71. After the timed interval, dump valve 52 opens and electronic switch 82 closes. As a result, the hydraulic pressure exerted on the side of control piston 30 facing toward cylinder 16 drops and the gas pressure on the other side of piston 30 together with the movement of fluid through line 14 causes poppet valve 26 to close openings 24, piston 22 begins to move downstream through cylinder 16, and the feedback path from ΔP transmitter 56 to servo control valve 54 becomes operative, so as to establish a constant pressure difference between the upstream and downstream sides of cylinder 16. Although the constant pressure difference could be zero, the pressure of the downstream side of piston 22 is preferably slightly larger than the pressure on the upstream side thereof. By the time piston 22 reaches a position in cylinder 16 where the light beam of sensor 37 is interrupted, piston 22 is moving in synchronism with fluid flow through line 14 and servo control

13960/LTR                    -11-

valve 52 has stabilized the pressure difference between the upstream and downstream sides of piston 22, thereby minimizing perturbations in the flow rate of the fluid passing through line 14. When piston 22 reaches the downstream end of cylinder 16, stops, not shown, cushion the impact of piston 22 and open poppet valve 26, as described in patent 4,152,922. When the light beam of sensor 38 is interrupted, electronic switch 82 opens, thereby rendering the feedback path inoperative, and dump valve closes, thereby returning hydraulic pressure to the side of piston 30 facing toward cylinder 16. The hydraulic pressure exerted against piston 30 drives piston 22 with poppet valve 26 open from the downstream end of cylinder 16 to the upstream thereof. When piston 22 reaches the upstream end of cylinder 16, the cycle carrying out one test run is complete. After timer 76 times out the given interval, which is sufficient to permit any fluid disturbances to subside, the described cycle is automatically repeated until the start command is removed from terminal 71.

In summary, the gas in cylinder 28 on the side of piston 30 opposite rod 32 exerts a constant force on piston 22 through piston 30 and rod 32, so as to cancel the above described force imbalance and the friction exerted on piston 22, while the liquid in cylinder 28 on the same side of piston 30 as rod 32 exerts a varying force on piston 22 through piston 30 and rod 32 so as to maintain a constant pressure difference across piston 22. As a result of these fluidic forces exerted on piston 22 through piston 30 and rod 32, the movement of piston 22 does not appreciably disturb the flow of fluid through line 14, and therefore has essentially little or no effect on the fluid flow rate and/or density in line 14.

13960/LTR                    -12-

Instead of the circuitry described in FIG. 2, the apparatus could be operated automatically in the same fashion under the control of a microprocessor, which could also process and evaluate the test data and, if desired, perform statistical analysis thereon. Alternatively, dump valve 52 and electronic switch 82 could be actuated manually to carry out one or more test run cycles.

The described embodiment of the invention is only considered to be preferred and illustrative of the inventive concept; the scope of the invention is not to be restricted to such embodiment. Various and numerous other arrangements may be devised by one skilled in the art without departing from the spirit and scope of this invention. For example, the invention can be practiced without the described hydraulic control system, which is the preferred embodiment when the line fluid is compressible, i.e., a gas. But such system is not preferred when the line fluid is incompressible i.e., a liquid. Instead of placing the dump valve and the solenoid control valve in series, as shown, they could be placed in parallel. Rather than being axially aligned, the control and measuring cylinders could be placed side by side, in which case the rod would have a U-shape and the pressurize gas from the plenum chamber would act on the side of the control piston to which the rod is connected. Alternatively, the control cylinder could be axially aligned with the downstream end of the measuring cylinder.

13960/LTR                     -13-

WHAT IS CLAIMED IS:

1.    An apparatus for measuring fluid flow having a fluid displacement measuring cylinder having near its ends, respectively, an inlet and an outlet, a fluid displacement measuring piston adapted to travel through the measuring cylinder as a fluid barrier, a control cylinder, a control piston adapted to travel through the control cylinder as a fluid barrier, a rod connecting the control piston only to the side of the measuring piston facing toward one end of the measuring cylinder, and means for sensing the movement of the measuring piston through the measuring cylinder; the improvement comprising:

a gas pressurized plenum chamber;

means for connecting the plenum chamber to the control cylinder so the force of the gas pressure on one side of the control piston urges the measuring piston toward the other end of the measuring cylinder; and

means for fluidically controlling the movement of the control piston through the control cylinder.

13960/LTR                          -14-

2.    The apparatus of claim 1, in which the control cylinder is axially aligned with the one end of the measuring cylinder, the rod is straight, and the connecting means connects the plenum chamber to the control cylinder so the force of the gas pressure is exerted on the side of the control piston facing away from the measuring piston.

3.    The apparatus of claim 2, in which the controlling means comprises a source of fluid at a higher pressure than the plenum chamber and means for alternatively applying and removing fluid under pressure from the source to and from the side of the control piston facing toward the measuring piston.

4.    The apparatus of claim 3, additionally comprising a fluid source connected to the inlet and a fluid receiver to which the outlet is connected, the value of the gas pressure in the plenum chamber resulting in a force on the control piston equal and opposite to the force imbalance on the measuring piston due to the static pressure of the fluid from the source flowing through the measuring cylinder plus the friction of the measuring piston.

5.    The apparatus of claim 4, in which the measuring piston has a passage for fluid flow through the measuring cylinder and means for opening and closing the passage.

6.    The apparatus of claim 5, in which the opening and closing means comprises as part of the measuring piston a poppet valve between the inlet and the passage, the poppet valve being moveable toward and away from the passage to close and open the passage respectively, the rod being connected to the side of the poppet valve facing toward the one end of the measuring cylinder.

13960/LTR                    -15-

7.    The apparatus of claim 1, in which the movement controlling means comprises:

a liquid supply;

means for connecting the liquid supply to the control cylinder so the force of the liquid pressure acts on the second side of the control piston; and

means for controlling the pressure of the liquid in the control cylinder.

8.    The apparatus of claim 7, additionally comprising a source of gas connected to the inlet and a gas receiver to which the outlet is connected.

9.    The apparatus of claim 8, in which the means for controlling the pressure of the liquid in the control cylinder comprises means for sensing the pressure difference across the measuring piston and means responsive to the sensing means for adjusting the pressure of the liquid in the control cylinder to cancel changes in the pressure difference across the measuring piston.

10.   The apparatus of claim 7, in which the means for controlling the pressure of the liquid in the control cylinder comprises means for sensing the pressure difference across the measuring piston and means responsive to the sensing means for adjusting the pressure of the liquid in the control cylinder to cancel changes in the pressure difference across the measuring piston.

11.   The apparatus of claim 10, in which the measuring piston has a passage  through it providing a path for fluid flow from the inlet to the outlet and a movable poppet valve for opening and closing the passage.  ·

12.   The apparatus of claim 11, in which the rod is connected to the measuring piston through the poppet valve so that movement of the rod opens and closes the poppet valve.

FIG. 1

1/2

0072916

Fig. 2